## Europäisches Patentamt
## European Patent Office
## Office européen des brevets

(11) Veröffentlichungsnummer: **0 106 103**
**A1**

# EUROPÄISCHE PATENTANMELDUNG

(21) Anmeldenummer: **83108703.6**

(22) Anmeldetag: **03.09.83**

(51) Int. Cl.³: **F 16 L 59/04**

(30) Priorität: **13.10.82 DE 3237877**

(43) Veröffentlichungstag der Anmeldung:
**25.04.84 Patentblatt 84/17**

(84) Benannte Vertragsstaaten:
**AT BE CH FR GB IT LI LU NL SE**

(71) Anmelder: **ERNO Raumfahrttechnik Gesellschaft mit
beschränkter Haftung
Hünefeldstrasse 1-5
D-2800 Bremen(DE)**

(72) Erfinder: **Meinecke, Günther, Dipl.-Phys.
An der Bürsteler Heide 19
D-2805 Stuhr 1(DE)**

(74) Vertreter: **Schramm, Ewald Werner Josef
ERNO Raumfahrttechnik GmbH Patentabteilung TW63
(TWB32) Postfach 10 78 45
D-2800 Bremen 1(DE)**

(54) Verfahren zur Herstellung von evakuierten Elementen zur Wärmeisolation.

(57) Die Erfindung betrifft ein Verfahren zur Herstellung evakuierter Isolationselemente, die aus einer Hülle und einem von dieser Hülle umgebenen Isolationswerkstoff bestehen. Nach dem Verfahren wird die vorzugsweise aus dünnen Folien bestehende Hülle in eine dem Isolationselement entsprechende Form eingebracht, die dann im Vakuum mit dem vorher evakuierten und entgasten Isolationswerkstoff gefüllt wird. Nach dem Füllen wird die Hülle vakuumdicht verschlossen und anschließend einem erhöhten Druck zur Verdichtung des pulverförmigen Isolationswerkstoffs ausgesetzt. Das Isolationselement wird auf diese Weise zu einem selbsttragenden Element.

Gegebenenfalls, insbesondere bei zu isolierenden Rohrleitungen, kann die eine Wand der Isolationselementenhülle aus einem festen Werkstoff, beispielsweise der Innenwand des zu isolierenden Rohres, bestehen. In diesem Fall wird nur der zweite Teil der Form, z.B. in Gestalt eines wieder entfernbaren Innenrohres, benötigt.

EP 0 106 103 A1

·7-

---

## Verfahren zur Herstellung von evakuierten Elementen zur Wärmeisolation

---

Die Erfindung betrifft ein Verfahren zur Herstellung von Elementen zur Wärmeisolation für ebene und/oder gekrümmte Oberflächen, die aus aus Folien oder Blechen aus schlecht wärmeleitendem Material geformten evakuierbaren Behältern und in diesen Behältern angeordneten Isolationswerkstoffen als Abstandhalter bestehen. Es sind bereits Elemente zur Wärmeisolation für ebene und/oder gekrümmte Oberflächen beschrieben, die aus aus Folien oder Blechen aus schlecht wärmeleitendem Material geformten evakuierbaren Behältern bestehen, in die Isolationswerkstoffe als Abstandhalter zur Aufnahme des atmosphärischen Außendrucks eingebracht sind. Der Behälter selbst kann dabei aus diffusionsdichten dünnen Folien aus einem schlecht wärmeleitendem Material geformt sein, oder aber auch aus zwei Deckblechen aus biegesteif gesickten Blechen, die in ihren Randbereichen vakuumdicht durch ebenfalls vorzugsweise gesickte, sehr dünne Folien verbunden sind, bestehen. Als Isolationswerkstoff für das Innere dieser Behälter sind Glasseidenfilze, Kieselgur, Kohlenstoff mineralischen Ursprungs usw. vorgeschlagen worden.

Die Verwendung von Kieselgur als Material zur Wärmedämmung ist an sich seit langem bekannt und unter anderem auch schon in der US-Patentschrift 2 164 143 beschrieben worden. In dieser US-Patentschrift ist auch schon angegeben worden, Kieselgur als wärmedämmendes Material in evakuierten Isolationselementen zu verwenden. Da Kieselgur als pulverförmiges Material allerdings nicht in der Lage ist, solche Isolationselemente in ihrer

Form zu stabilisieren, wenn die Hülle dieser Elemente aus flexiblem Material besteht, wird in dieser Patentschrift empfohlen, die Elemente einem erhöhten Druck auszusetzen, so daß durch einen Preßvorgang der Isolationswerkstoff Kieselgur eine stabile Form annimmt. Dabei soll der bei diesem Vorgang aufgewendete Druck mindestens so groß sein, wie der später auf diese Elemente bei ihrer Verwendung einwirkende Außendruck. Die Evakuierung dieser Elemente erfolgt mit Hilfe eines Rohrleitungssystems im Inneren der Elemente, das mit einer Absaugöffnung verbunden ist, die ihrerseits nach Evakuierung der Elemente vakuumdicht verschlossen wird.

Ferner ist bereits ein besonderes Verfahren zur Herstellung derartiger Isolationselemente vorgeschlagen worden, insbesondere zur Herstellung von Isolationselementen, die zur Isolation von Rohrleitungen auf deren Innenseite angebracht sind. Nach diesem Verfahren, bei dem die Außenwandungen der Isolationselemente einerseits aus dem Rohr, das zu isolieren ist, selbst und einer mit diesem Rohr auf seiner Innenseite gasdicht verbundenen flexiblen Hülle bestehen, wird nach dem Einfüllen des pulverförmigen Materials, das bei und/oder nach dem Einfüllen zusammen mit der Hülle gasfrei ausgeheizt wird, die gefüllte Hülle evakuiert und dann vakuumdicht verschlossen, worauf nach dem Verschließen mindestens auf Teile der Hülle ein vorgegebener hoher Druck aufgebracht wird, durch den mindestens Teile der Hülle mit ihrem Inhalt irreversibel verformt werden. Bei Verwendung derartiger Isolationselemente auf der Innenseite fester Rohre in einem Hochdruckleitungssystem, bei dem die Hülle der Isolationselemente aus der Innenwand der festen Rohre relativ großer Materialstärke und einer damit vakuumdicht verbundenen, innen liegenden, flexiblen, dünnen Hüllenwand besteht, wobei das poröse pulverförmige Isoliermaterial in den Zwischenraum zwischen Aussenrohr und flexibler Hüllenwand eingefüllt wird und/oder nach

dem Einfüllen gasfrei ausgeheizt wird, worauf der gefüllte Raum zwischen Außenrohr und flexibler Hüllenwand evakuiert und dann vakuumdicht verschlossen wird, wird vorzugsweise anschließend auf die innen liegende dünne Hüllenwand ein vom Innenraum des Rohres wirkender, radial nach außen gerichteter Druck aufgebracht, der vom Außenrohr aufgefangen wird und das Isoliermaterial komprimiert. Dieser Druck kann dabei durch ein Fluid aufgebracht werden, das in dem durch die flexible Hüllenwand gebildeten Rohr in den Innenraum strömt. Der Kompressionsdruck kann dabei Werte von einigen Hundert Bar annehmen.

Schließlich ist auch bereits vorgeschlagen worden, ein doppelwandiges Rohr vorzusehen, bei dem in den Zwischenraum zwischen beiden Rohren ein Isoliermaterial, wie z.B. Kieselgur, eingefüllt wird, wobei zuvor das Isoliermaterial selbst in einem Vakuum von etwa $10^{-3}$ Bar entgast und ausgeheizt worden ist und unter diesem Vakuum in den Zwischenraum zwischen den beiden Rohren, der auch seinerseits evakuiert ist, eingefüllt wird. Dabei kann durch Rütteln der Rohre während der Befüllung ein Füllungsgrad erreicht werden, der zumindest nahezu der dichtesten Packung des Isoliermaterials entspricht. Auf diese Weise ist das zeitraubende Evakuieren nach dem Einfüllen des Isoliermaterials in die Isolationselemente zu vermeiden. Allerdings muß dabei selbstverständlich ein höheres Gewicht der Rohre in Kauf genommen werden, da anstelle der dünnen, sehr leichten Folie, die nach dem vorgenannten Verfahren die Innenwand der Isolationselemente bilden, entsprechende feste Rohre zur Anwendung gelangen. Eine Verfestigung des Füllstoffes in einem Ausmaß, wie er nach dem vorgenannten Verfahren erreichbar ist, ist dabei selbstverständlich nicht möglich.

– 4 –

Aufgabe der vorliegenden Erfindung ist es, ein Verfahren anzugeben, das zur Herstellung von insbesondere gekrümmten Isolationselementen geeignet ist, wobei die Isolationselemente selbst als mit einem an sich pulverförmigen Isolationsmaterial gefüllte evakuierte, selbsttragende Elemente ausgebildet sind. Die Wände dieser Isolationselemente können dabei zumindest teilweise aus dünnen Folien, insbesondere Kunststoffolien, bestehen, die entsprechend dem späteren Verwendungszweck und den mit ihnen in Berührung kommenden Materialien hinsichtlich ihrer chemischen Resistenz ausgewählt sein können.

Erfindungsgemäß besteht das Verfahren zur Herstellung von Isolationselementen aus folgenden Verfahrensschritten:

1. Eine Negativform des herzustellenden Isolationselements wird mit einer Folie geeigneter chemischer Beschaffenheit ausgekleidet.

2. Die Form wird im Vakuum mit dem ebenfalls evakuierten und ausgeheizten Isolierwerkstoff gefüllt.

3. Das Isolationselement wird vorzugsweise durch Verschweißen der Folien im Vakuum innerhalb der Form verschlossen.

4. Der Isolationswerkstoff im Inneren des Isolationselements wird durch Aufbringen eines hohen Druck, beispielsweise durch Erhitzen der Form, verfestigt. Es ist zweckmäßig, für die Formen ein Material mit hoher Wärmeausdehnung zu verwenden.

Besonders vorteilhaft ist, das Verfahren bei der Herstellung von Isolationselementen mit gekrümmten Oberflächen zu verwenden, insbesondere dann, wenn zumindest ein Teil der Behälterwand des Isolationselements selbst als Form zur Herstellung des Isolationselements verwendbar ist. Das gilt ganz besonders für die Herstellung von Isolationselementen für die Innenwandung von Rohrleitungen. In diesem Fall ist es möglich, das Leitungsrohr selbst als

einen Teil der Herstellungsform zu verwenden, während ein lediglich zur Herstellung der Isolation erforderliches Innenrohr als zweiter Teil der Form verwendet ist. Dabei kann es zweckmäßig sein, die Behälterwand der Isolationselemente zum Teil durch das Leitungsrohr selbst bilden zu lassen, mit dem eine Folie, die die Innenwand der Isolationselemente darstellt, vakuumdicht verbunden ist. Diese vakuumdichte Verbindung der Folie mit dem Außenrohr wird zumindest zum Teil selbstverständlich erst nach dem Einfüllen des Isolationswerkstoffes durchgeführt. Zur Verdichtung des Isolationswerkstoffes wird dann das den inneren Teil der Form bildende Rohr, beispielsweise durch Einfüllen einer entsprechend erhitzten Flüssigkeit, in dem Ausmaß erwärmt, daß der durch die Ausdehnung des Innenrohrs entstehende radial wirkende Druck die vorgesehene Verdichtung des Isolationswerkstoffs bewirkt.

Mit Hilfe zweier Rohre lassen sich aber auch nach dem erfindungsgemäßen Verfahren selbsttragende Isolationsrohre herstellen, deren Wandungen aus flexiblen Folien und deren Füllung aus einem pulverförmigen Isolationswerkstoff besteht. Dabei wird die entsprechende Verfestigung durch Erwärmen des Innenrohrs und gegebenenfalls Kühlung des Außenrohrs erreicht.

In gleicher Weise ist es auch möglich, schalenförmige Isolationselemente als selbsttragende Elemente herzustellen. Derartige Elemente können beispielsweise besonders gut zur Isolation von Wärmespeichern verwendet werden.

Die nach diesem Verfahren hergestellten Isolationselemente weisen den großen Vorteil auf, daß ihr Herstellungsverfahren praktisch völlig unabhängig wird von der Absauggeschwindigkeit, mit der derartige Isolationselemente, die vor dem Evakuieren

- 6 -

mit dem Isolationswerkstoff befüllt werden, evakuiert werden können. Andererseits weisen sie aber gegenbüber den Verfahren, bei denen die Wandung des Isolationselementes beiderseits aus festen Rohren besteht, den Vorteil auf, daß sie in verschiedensten Formen herstellbar sind und außerdem nur durch die Verwendung dünner Folien wesentlich leichter hergestellt werden können. Ferner kann durch die Auswahl der Folien auf den späteren Verwendungszweck Rücksicht genommen werden, da es Folien unterschiedlicher chemischer Eigenschaften gibt, die im übrigen aber die Forderung nach Vakuumdichtheit erfüllen.

8224E42                                    Bremen, 11. Oktober 1982
                                           Mei

---

ERNO Raumfahrttechnik· GmbH

---

Verfahren zur Herstellung von evakuierten Elementen zur
Wärmeisolation

---

Patentansprüche

1.      Verfahren zur Herstellung von evakuierten Elementen
        zur Wärmeisolation, die aus einer Hülle und einem in
        diese Hülle eingefüllten Isolationswerkstoff als Ab-
        standshalter, insbesondere einem porösen, pulverför=
        migem Material von unregelmäßiger Form der Pulver-
        teilchen, wie beispielsweise Kieselgur, bestehen,
        dadurch gekennzeichnet, daß
        a) die aus einem flexiblen Material bestehende Hülle
           in eine dem Isolationselement entsprechende Form
           eingebracht wird,
        b) die Form mit der Hülle in einem evakuierten Raum
           mit dem ebenfalls evakuierten, vorzugsweise durch
           Ausheizung entgastem Isolationswerkstoff gefüllt
           wird,

c) der Isolationswerkstoff beispielsweise durch Rütteln vorverdichtet wird,

d) die Hülle vakuumdicht verschlossen wird und

e) das Isolationselement unter Anwendung von erhöhtem Druck derart nachverdichtet wird, daß
es zum selbsttragenden Isolationskörper wird.

2. Verfahren zur Herstellung nach Anspruch 1, dadurch
gekennzeichnet, daß die Hülle teilweise aus einem
festen Material, beispielsweise der Innenwand eines
Rohres besteht, das einen Teil der Form zugleich
ersetzt, und daß der andere Teil der Form, beispielsweise ein in das äußere Rohr eingeschobenes, wieder
entfernbares Rohr. mit der flexiblen Hüllwand überzogen ist, die vor dem Einfüllen des Isolationswerkstoffs im Vakuum mit dem Außenrohr einseitig
vakuumdicht verbunden ist.

3. Verfahren nach Anspruch 1 oder 2, dadurch gekennzeichnet, daß die Form aus einem Material mit hohem Ausdehnungskoeffizienten besteht und daß der
nachträglich aufgebrachte Druck zur Nachverdichtung des eingebrachten Isolationswerkstoffs durch
Erwärmen der Form erzeugt wird.

4. Verfahren nach mindestens einem der Ansprüche 1
bis 3, dadurch gekennzeichnet, daß die Form mit
einer Vielzahl kleiner Bohrungen versehen ist,
durch die ein Fluid in den Raum zwischen Formwand
und flexibler Isolationselementenhülle einleitbar ist zwecks Erzeugung des zur Nachverdichtung
erforderlichen Drucks.

5. Verfahren nach mindestens einem der Ansprüche 1
bis 3, dadurch gekennzeichnet, daß der erforderliche Druck zur Nachverdichtung durch Erwärmung des des einen Teils der Form unter gleichzeitiger Abkühlung des anderen Teils der Form erzeugt wird.

6. Verfahren nach mindestens einem der Ansprüche 1 bis 5, dadurch gekennzeichnet, daß als Form zwei ineinander gesteckte Rohre verwendet sind, deren einander zugewandte Seiten mit einer flexiblen Hülle überzogen sind, die an einem Ende der Rohre vor dem Einfüllen des Isolationswerkstoffs im Vakuum miteinander vakuumdicht verbunden sind, und daß nach dem Einfüllen des Isolationswerkstoffs, dem vakuumdichten Verschließn am anderen Rohrende und dem Nachverdichten nach Entfernung der Rohre ein selbsttragendes rohrförmiges Isolationselement erzeugt wird.

7. Verfahren nach mindestens einem der Ansprüche 1 bis 5, dadurch gekennzeichnet, daß als Form zwei konzentrische Kugelhalbschalen verwendet sind.

8. Verfahren nach mindestens einem der Ansprüche 1 bis 7, dadurch gekennzeichnet, daß als flexibles Hüllmaterial Kunststoffolien verwendet sind, deren Ausgangsmaterial nach dem späteren Verwendungszweck der Isolationselemente ausgewählt ist.

9. Verfaheren nach einem der Ansprüche 1 bis 8, dadurch gekennzeichnet, daß die Form zur Herstellung der Isolationselemente aus Materialien mit unterschiedlichem Ausdehnungskoeefizienten gebildet ist.

**0106103**

Nummer der Anmeldung

# EUROPÄISCHER RECHERCHENBERICHT

EP 83 10 8703

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-A-3 034 468 (ERNO) <br><br> * Seite 5, Zeilen 1-30 * | 1,2,4, 9 | F 16 L 59/04 |
| X | EP-A-0 017 095 (SCHILF) <br><br> * Seite 12, Zeile 1 - Seite 14, Zeile 15 * | 1,2,4, 9 | |
| Y | CH-A- 343 195 (F. TSCHAPPU) <br> * Seite 1, Zeilen 16-33; Figuren 1,2 * | 1,2,7 | |
| Y | GB-A- 871 635 (EXPANDED PERLITE LTD.) <br> * Seite 1, Zeilen 8-14, 59-72; Seite 2, Zeilen 22-49; Figur 1 * | 1,2,4 | |
| Y | GB-A- 962 180 (TRIANGLE CONDUIT & CABLE CO.) <br> * Seite 1, Zeile 71 - Seite 2, Zeile 76; Figuren 1-3 * | 1,2,4, 8,9 | **RECHERCHIERTE SACHGEBIETE (Int. Cl. ³)** <br><br> F 16 L |
| A | DE-A-2 615 299 (ERNO) <br> * Seite 5, Zeilen 21-25 * | 1 | |
| A | DE-A-2 543 787 (P.S. PEDERSEN) <br> * Ansprüche 1-14 * | 1 | |
| | ---     -/- | | |

Der vorliegende Recherchenbericht wurde für alle Patentansprüche erstellt.

| Recherchenort <br> DEN HAAG | Abschlußdatum der Recherche <br> 09-01-1983 | Prüfer <br> ANGIUS P. |
|---|---|---|

Europäisches
Patentamt

## EUROPÄISCHER RECHERCHENBERICHT

### EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 923 665  (L. FINK)  * Seite 13, Zeilen 11-24 * | 1,2,8, 9 | |
| A | DE-A-2 716 316  (KNOCHE)  * Seite 3, Zeile 7 - Seite 4, Zeile 1; Figuren * | 1,3,4, 7,9 | |
| A | DE-A-1 600 496  (R. MICHAUX)  * Seite 2, Zeilen 11-17 * | 1,3,4, 5 | |

RECHERCHIERTE
SACHGEBIETE (Int. Cl. ³)

Der vorliegende Recherchenbericht wurde für alle Patentansprüche erstellt.

| Recherchenort DEN HAAG | Abschlußdatum der Recherche 09-01-1983 | Prüfer ANGIUS P. |
|---|---|---|